# EUROPEAN PATENT SPECIFICATION

(11) **EP 0 880 891 B1**
(45) Date of publication and mention of the grant of the patent: **03.08.2005**
(21) Application number: 98105798.7
(22) Date of filing: 30.03.1998
(51) Int. Cl.: A01K 87/00

(54) **Fishing rod**
Angelrute
Canne à pêche

(30) Priority: 30.05.1997 JP 15786197; 19.09.1997 JP 27385497
(43) Date of publication of application: 02.12.1998
(73) Proprietor: DAIWA SEIKO INC., Higashikurume-shi, Tokyo (JP)
(72) Inventor: Ono, Hiroyuki, Kawasaki-shi, Kanagawa (JP); Naeki, Yoshihiro, Fuchu-shi, Tokyo (JP); Matsubara, Teiji, Edogawa-ku, Tokyo (JP); Oda, Hiroshi, Kawagoe-shi, Saitama (JP)
(74) Representative: Grünecker, Kinkeldey, Stockmair & Schwanhäusser Anwaltssozietät

(56) References cited:
- DE-A- 2 039 115
- GB-A- 1 412 952
- GB-A- 2 301 010
- US-A- 3 452 468
- US-A- 4 057 926
- US-A- 4 214 395
- US-A- 5 076 004

## Description

A fishing rod of such type is known from US 4 214 395.

Japanese Utility Model Application Publication No. 59-20057 discloses a structure in which a so-called solid member, which is formed solidly by impregnating reinforced fibers arranged in the axial direction with a resin, is used at a tip of a fishing rod. This tip rod section is constructed such that glass fibers with a small modulus of elasticity are used as reinforced fibers of the solid member, and that a prepreg using carbon fibers with a large modulus of elasticity is wound around an outer periphery of a butt portion of the solid member and is formed integrally therewith. It has been the conventional practice to use a solid member as a tip rod section in this manner.

However, as rods for fishing large fish or fish with strong tugs, rod portions ranging from at least a butt rod to a rod portion close to a tip are conventionally formed from hollow rod pipes. The reason for this is that, since a large bending force acts in a butt portion when such fish are caught, the fishing rod must be made capable of withstanding the tugs of the fish by enlarging the bending rigidity of the butt portion to some degree, i.e., by enlarging the diameter to some degree, and that light weight must also be attained. However, the tip of the rod must naturally be made slender. Accordingly, hollow rod pipes which are each manufactured by winding a prepreg around a core are used as rod portions excluding at least a rod portion close to the tip, and these rod portions are generally joined such that they become gradually slender toward the tip, thereby forming a fishing rod of a predetermined length.

However, since the butt portion is formed from a hollow pipe whose bending rigidity is large to some extent and whose diameter is large, if this portion is deflected substantially, the so-called crush breakage occurs. For this reason, the portion close to an angler's hand is structured to be provided with even larger bending rigidity so that the portion close to the hand will not be deflected much. Since the fishing rod thus structured has a large diameter at the butt portion, and a predetermined small diameter at the tip portion, it is natural that, in general, the fishing rod becomes long. For this reason, in terms of the deflected state of the fishing rod in a case where a fish is caught, the fishing rod is deflected substantially from the intermediate portion to the tip, but is not deflected so much from the intermediate portion to the butt portion. Due to the distance from the butt portion to the intermediate portion, even in the state in which a fish is caught and the fishing rod is deflected, the distance from the butt portion being gripped by the angler to the rod tip is long, so that the bending moment acting in the butt portion due to the load of the fish and the like is very large, and the emaciation of the physical strength of the angler who withstands this bending moment is very intense.

In addition, since the carbon fibers wound around the outer periphery of the solid member disclosed in the above-described publication has a modulus of elasticity larger than that of the glass fibers of the solid member, the rigidity of the tip before and behind the position of a front edge of the wound prepreg changes sharply, and the state of deflection before and behind this position changes sharply. Hence, there is a drawback in that the fishing rod is liable to break at this position. In addition, since the kinds of reinforced fibers differ between the solid member and the prepreg wound therearound, the different coefficients of expansions are likely to distort the formed tip.

Prior art document US 4,214,395 teaches a fishing rod which is constituted by a tubular cantilever rod assembly. Said assembly comprises a body with an inner core member, wherein said body or outer member and said inner member are connected to each other at the butt end thereof. The joint between the body and said core member at the butt end thereof is provided by a butt end or a handle. The tip section of said butt end is provided with some solid part having a recess, wherein the body and the core member are inserted therein.

The further prior art document GB 2 301 010 A teaches a fishing rod having a vibration damping elastomeric material provided as a tapered element within a hollow rod blank near the rod tip and as an intervening layer between the rod blank and the rod rib. With said arrangement, unwanted vibration is dampened and casting characteristics are improved.

A fishing rod as indicated above can be taken from prior art document US 4,057,926. In particular, said prior art document teaches a strengthened fiber glass fishing rod including a hollow tubular section and a solid tip section, both sections being tapered longitudinally with the base of the tip section inserted in and cemented to the butt section. To conceal the joint between the two sections and greatly enhance the appearance of the rod, the frame of a guide for the fishing line is laid across the joint and fastened by wrapping of thread which extends over continuous end portions of the tip and the butt rod section.

It is an objective of the present invention to provide a fishing rod as indicated above having high connection strength and does not break even if a large fish is caught.

According to the present invention, said objective is solved by a fishing rod according to independent claim 1. Preferred embodiments are laid down in the dependent claims.

It is a special advantage of the present invention to provide a joint type fishing rod which does not break even if large fish is caught by a slender fishing rod.

It is a further advantage of the present invention to provide fishing rod which even when fishing large fish or fish demonstrating strong tugs, fishing can be performed comfortably even if the anglers physical strength is weak.

Accordingly, since a butt rod is formed by a solid rod and an outer layer or by the solid rod alone, the butt rod can be made a slender butt rod, and a tip rod which is joined to the butt rod can also be made a slender tip rod. As a result, the overall joined-type fishing rod becomes slender, so that the fishing rod operation such as a casting operation is easy to perform.

Moreover, since the tip rod is hollow, it is possible to prevent a heavy hanging down of the rod when the fishing rod is held.

Further, even when a large fish is caught, since the butt rod is formed by the solid rod and the outer layer or by the solid rod alone, it is possible to obtain a tough and high-strength fishing rod which is capable of coping with large deflection and preventing breakage.

That is, in this application, attention is focused on the fact that the crush breakage can be prevented if a solid rod is used, and the fishing rod down to the butt portion can be deflected substantially by adoption of the solid rod, thereby making it possible to effect comfortable fishing.

Hereinafter the present invention is illustrated and explained by means of preferred embodiments in conjunction with the accompanying drawings, in the drawings wherein:
Fig. 1 is a side elevational view of a joined-type fishing rod in accordance with a first embodiment,
Fig. 2 is an exploded side cross-sectional view of the joined-type fishing rod,

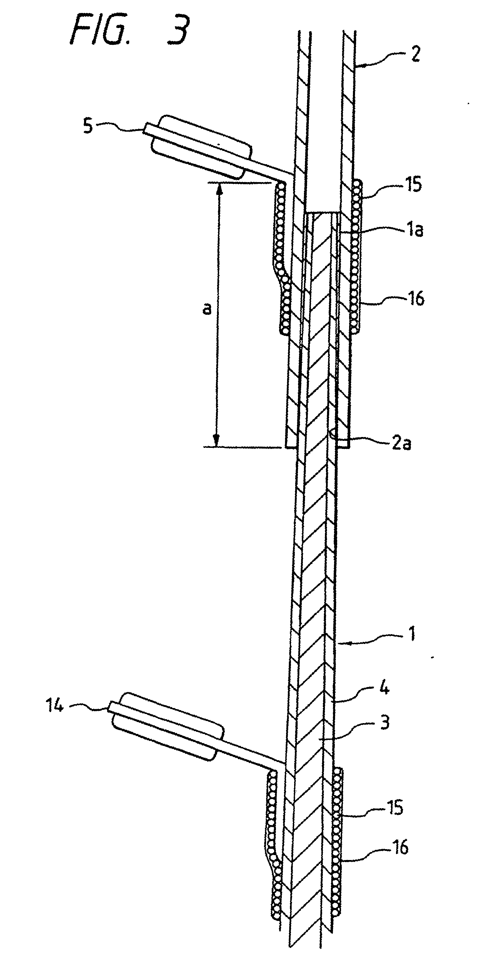

Fig. 3 is an enlarged side cross-sectional view of a joining portion thereof, not according to the invention;
Fig. 4 is an enlarged side cross-sectional view of a distal end of a solid rod thereof in the process of being manufactured, not according to the invention;
Fig. 5 is an enlarged side cross-sectional view of an essential portion of a joined-type fishing rod in which the butt rod is formed from a solid rod,
Fig. 6 is an enlarged side cross-sectional view of an essential portion of a joined-type fishing rod, not according to the invention
Fig. 7 is a side elevational view of a fishing rod,

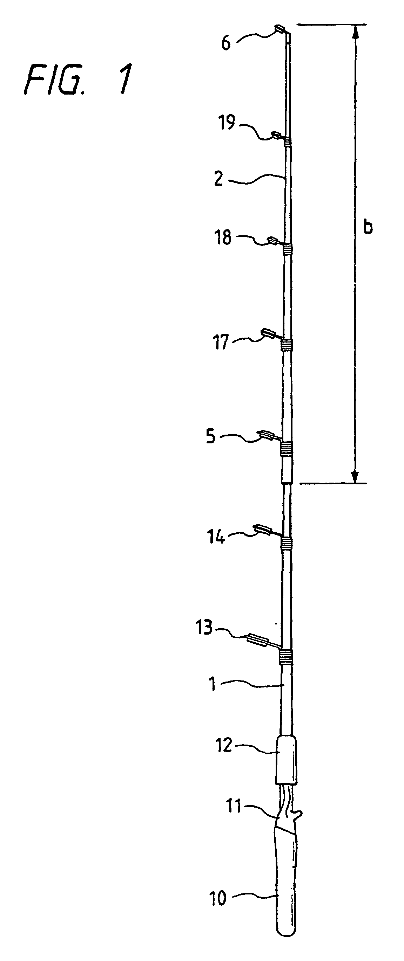

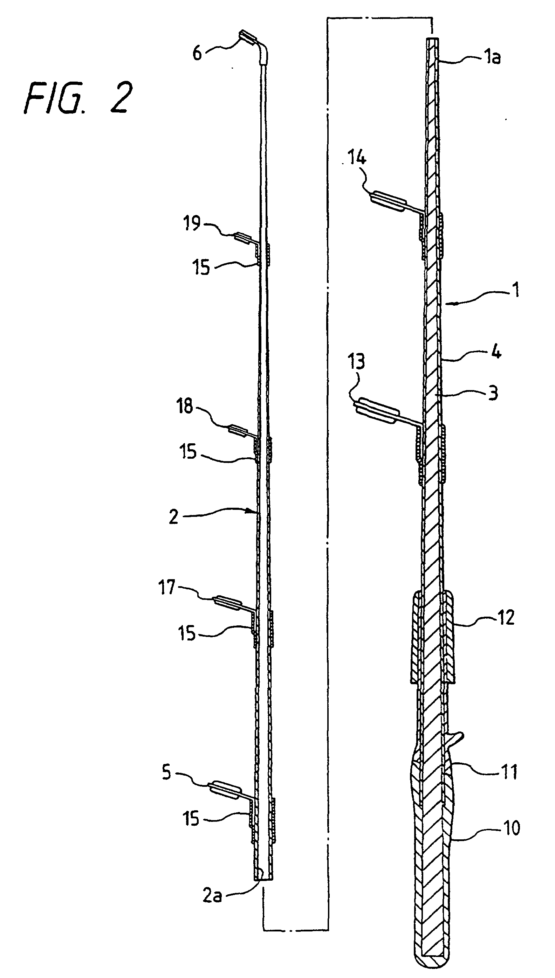

Hereafter, a description will be given of embodiments with reference to the drawings. Figs. 1 and 2 illustrate a first embodiment, in which Fig. 1 is a side elevational view of a joined-type fishing rod; Fig. 2 is an exploded side cross-sectional view of the joined-type fishing rod.

A joined-type fishing rod is arranged such that a tip rod 2 shaped in the form of a hollow rod pipe is joined to a distal end of a butt rod 1 shaped in the form of a solid rod.

The butt rod 1 is arranged such that a prepreg is wound around an outer periphery of the solid rod 3 to form the outer layer 4 in an integrally superposed form, or the butt rod is formed by the solid rod 3 alone. A grip 10, a reel-leg mounting member 11, and a grip 12 are secured to the outer periphery of the solid rod 3 on the butt side. Line guides 13 and 14 are fixed to the butt rod 1 by winding strings 15 therearound at positions between the grip 10 and a distal-end joining portion 1a, and the strings 15 are secured by a synthetic resin material 16.

A joining portion 2a is formed on an inner periphery of the tip rod 2 on the butt side, and line guides 5 and 17 are fixed to the outer periphery of the tip rod 2 on the butt side by winding the strings 15 therearound, while line guides 18 and 19 are fixed to the outer periphery forwardly of the line guide 17 by winding the strings 15 therearound.

The line guide 5 is provided forwardly of the distal end of the solid rod 3 joined to the tip rod 2.

A line top guide 6 is secured to the distal end of the tip rod 2.

The outer periphery of the tip rod 2 on the butt side is formed in such a manner as to be able to accommodate the distal end of the butt rod 1 by a length **a**.

The length **a** is preferably larger than or equal to 30 mm.

The overall length **b** of the tip rod 2 is formed to be substantially half the overall length of the joined-type fishing rod.

For this reason, the tip rod 2 is strong against large deflection, and since the tip rod 2 is formed from a hollow rod pipe, the tip rod 2 does not hang down heavily when the fishing rod is held.

When the solid rod 3 of the butt rod 1 is formed, carbon fibers of high-strength fibers are tied, are impregnated with a thermosetting resin, such as epoxy resin, phenol resin, and polyester resin, and are formed by thermosetting treatment in accordance with the conventional method.

When the tip rod 2 is formed, after a prepreg sheet, in which a woven cloth or the like reinforced by high-strength carbon fibers is impregnated with a thermosetting resin, such as epoxy resin, phenol resin, and polyester resin, is wound around an unillustrated core by an appropriate number of turns, taping is provided on the outer side thereof, the assembly is placed in a heating furnace, and is formed by thermosetting treatment in accordance with the conventional method.

As the elasticity of the aforementioned carbon fibers, 30 t/mm² is respectively used.

When the outer layer 4 is formed integrally around the outer periphery of the solid rod 3 of the butt rod 1, after a prepreg sheet, in which a woven cloth or the like reinforced by high-strength carbon fibers is impregnated with a thermosetting resin, such as epoxy resin, phenol resin, and polyester resin, is wound around the outer periphery of the preformed solid rod 3 by an appropriate number of turns, taping is provided on the outer side thereof, and the assembly is placed in the heating furnace, and is formed by thermosetting treatment in accordance with the conventional method.

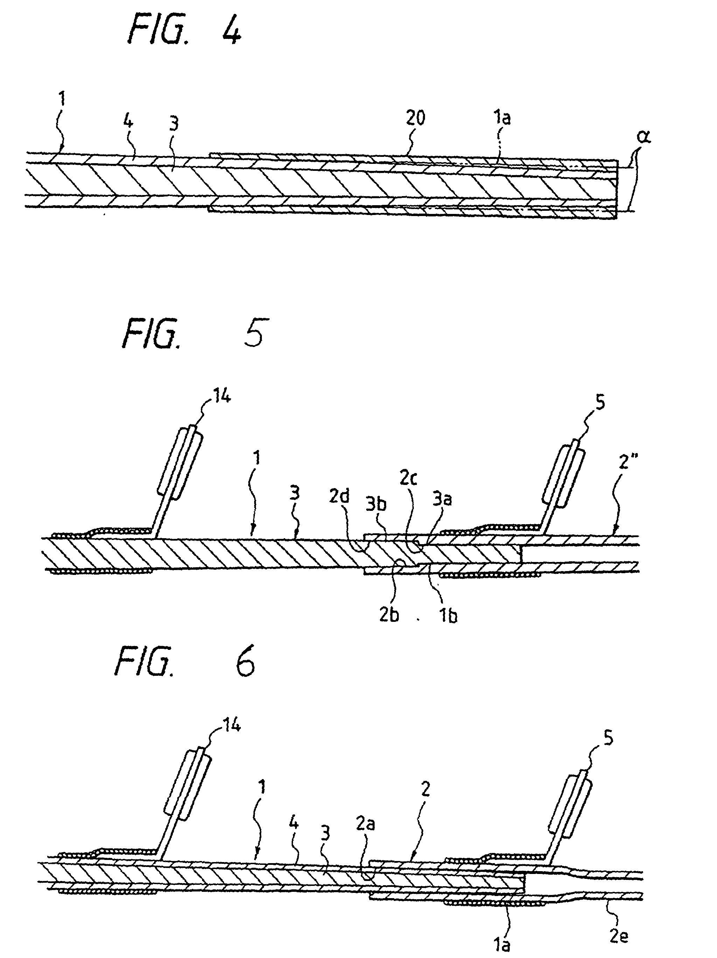

Around the outer periphery of the distal end of the outer layer 4 of the butt rod 1, a prepreg sheet, in which a woven cloth or the like reinforced by high-strength carbon fibers is impregnated with a thermosetting resin, such as epoxy resin, phenol resin, and polyester resin, is wound by an appropriate number of turns, then taping is provided on the outer side thereof, and the assembly is placed in the heating furnace, and is formed by thermosetting treatment in accordance with the conventional method, thereby forming an outer covering layer 20. After the treatment, the outer covering layer 20 is subjected to grinding processing at a joining taper line α shown in Fig. 4, thereby forming a joining portion 1a.

When the above-described joined-type fishing rod is used, and a large fish is caught and the fishing rod is deflected substantially, the distal end side of the butt rod 1 and the tip rod 2 are deflected, and the catch is fished up.

If the joined-type fishing rod is arranged as described above, since the butt rod 1 is formed by the solid rod 3 and the outer layer 4 or by the solid rod 3, the butt rod 1 can be made a slender butt rod, and the tip rod 2 which is joined to the butt rod 1 can also be made a slender tip rod. As a result, the overall joined-type fishing rod becomes slender, so that the fishing rod operation such as a casting operation is easy to perform.

Moreover, since the tip rod 2 is hollow, it is possible to prevent a heavy hanging down of the rod when the fishing rod is held.

Further, even when a large fish is caught, since the butt rod 1 is formed by the solid rod 3 and the outer layer 4 or by the solid rod 3, it is possible to obtain a tough and high-strength fishing rod which is capable of coping with large deflection and preventing breakage.

In the foregoing description, as the elasticity of the aforementioned carbon fibers, 30 t/mm² is respectively used, but 40 t/mm² - 65 t/mm² may be used for the solid rod 3, 20 t/mm² - 50 t/mm² may be used for the outer layer 4, and 20 t/mm² - 65 t/mm² may be used for the tip rod 2.

If 40 t/mm² - 65 t/mm² is used for the solid rod 3, 20 t/mm² - 50 t/mm² is used for the outer layer 4, and the elasticity of the outer layer 4 is made lower than that of the solid rod 3, it is possible to obtain a tensile, lightweight, and high-strength fishing rod.

If the elasticity of the tip rod 2 is made lower than that of the butt rod 1, the diameter can be enlarged, and light weight can be attained.

If the elasticity of the butt rod 1 is made lower than that of the tip rod 2, the fishing rod can be formed into one which has a small diameter and a sharp condition.

Fig. 5 is an enlarged side cross-sectional view of an essential portion of a joined-type fishing rod in which the butt rod is formed from a solid rod.

The butt rod 1 is formed from the solid rod 3.

At a distal end of the solid rod 3, a joining portion 1b is formed by a small-diameter gently tapered portion 3a and a large-diameter gently tapered portion 3b.

A joining portion 2b of the tip rod 2 formed of a hollow rod pipe is joined to the joining portion 1b of the solid rod 3.

The joining portion 2b is formed from a gently tapered the inner periphery of the butt side of the tip rod 2.

The other arrangements are substantially identical to those of the above-described first embodiment.

If the butt rod 1 and the tip rod 2 are formed as indicated above, the fishing rod can be made more slender.

Fig. 6 is an enlarged side cross-sectional view of an essential portion of a joined-type fishing rod, not according to the invention.

A tip rod 2" is an example in which the elasticity of the carbon fibers is set to 65 t/_{MM}², and a portion located forwardly of the joining portion 2a is formed as a small-diameter portion 2e, and a portion located forwardly thereof is formed with a small diameter.

The other arrangements are substantially identical to those of the above-described first embodiment.

If the tip rod is formed with a small diameter as in the case of the tip rod 2", the fishing rod can be formed as one exhibiting a sharp condition.

These embodiments demonstrates advantages which are described below.

Since the butt rod is formed by the solid rod and is made a slender butt rod, and the tip rod which is joined to the butt rod can also be made a slender tip rod. As a result, the overall joined-type fishing rod becomes slender, so that the fishing rod operation such as a casting operation is easy to perform.

Moreover, since the tip rod is hollow; it is possible is held.

Further, even when a large fish is caught, since the butt rod is formed by the solid rod, it is possible to obtain a tough and high-strength fishing rod which is capable of coping with large deflection and preventing breakage.

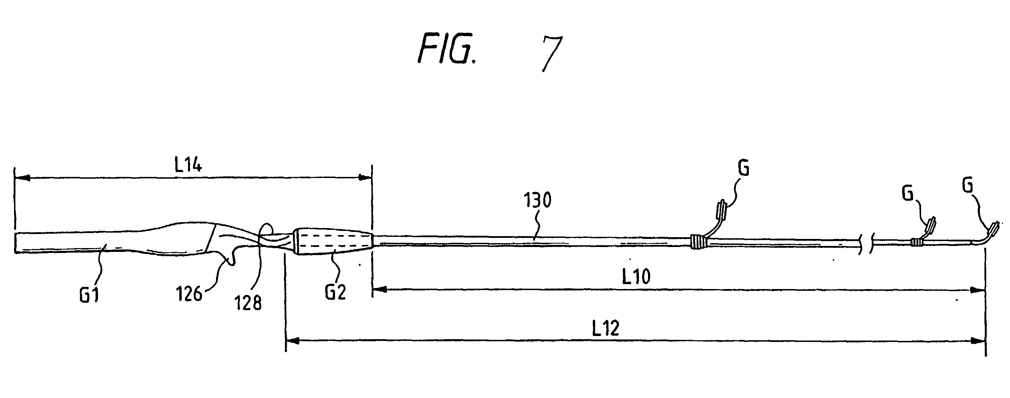

Fig. 7 shows a casting rod. The portion of a region L14 is a handle portion, and its front-side region L10 is the region where deflection is expected to take place. In the light of connection with the handle portion, a solid rod 130 is used over the range of a length L12, and a butt portion thereof is inserted and fixed in the handle portion, but a structure may be adopted such that the solid rod 130 is inserted over the entire length of the fishing rod including the handle portion L14. The handle portion has a rear-side grip G1 and a front-side grip G2, and a reel mounting portion 128 is provided between the two grips. The front-side grip G2 is threadedly secured, and a reel is mounted or removed by being rotated. Reference 126 denotes a trigger, and G denotes a line guide.

## Claims

1. Fishing rod comprising:
a solid rod section having a distal end (1b); and
a hollow rod pipe section having a butt end joined to said distal end (1a, 1b) of said solid rod section,
said solid rod section is a butt rod (1) and said hollow rod pipe section is a tip rod (2") of the fishing rod, wherein said distal end (1b) of the solid butt rod (1) is accommodated by the butt end of the hollow tip rod (2"), **characterized in that** said distal end (1b) of said solid rod section includes a first tapered portion and a second tapered portion larger in diameter than said first tapered portion, both of said first and second tapered portions being received by said hollow rod pipe section.

2. Fishing rod according to claim 1, **characterized by** an outer layer (4) formed integrally around an outer periphery of said solid rod section.

3. Fishing rod according to claim 2, **characterized in that** the elasticity of the outer layer (4) is made lower than the elasticity of said solid rod section.

4. Fishing rod according to at least one of the claims 1 to 3, **characterized in that** fish line guides (5, 14) are provided on both the butt rod (1) and the hollow tip rod (2").

## Patentansprüche

1. Angelrute mit:
einem massiven Rutenabschnitt, der ein vorauslaufendes Ende (1b) aufweist; und
einen hohlen Rutenrohrabschnitt, der ein Endstückende, verbunden mit dem vorauslaufenden Ende (1a, 1b) des massiven Rutenabschnittes aufweist,
wobei der feste Rutenabschnitt eine Endstückrute (1) und der hohle Rutenrohrabschnitt eine Spitzenrute (2") der Angelrute ist, wobei das vorauslaufende Ende (1b) der massiven Endstückrute (1) durch das Endstückende der hohlen Spitzenrute (2") aufgenommen ist,
**dadurch gekennzeichnet, dass** das vorauslaufende Ende (1b) des massiven Rutenabschnittes einen ersten konischen Abschnitt und einen zweiten konischen Abschnitt, der im Durchmesser größer ist als der erste konische Abschnitt, enthält,
wobei sowohl der erste als auch der zweite konische Abschnitt durch den hohlen Rutenrohrabschnitt aufgenommen ist.

2. Angelrute nach Anspruch 1, **gekennzeichnet durch** eine Außenlage (4), gebildet integral rund um einen Außenumfang des massiven Rutenabschnittes.

3. Angelrute nach Anspruch 2, **dadurch gekennzeichnet, dass** die Elastizität der Außenlage (4) niedriger als die Elastizität des massiven Rutenabschnittes ist.

4. Angelrute nach zumindest einem der vorhergehenden Ansprüche 1 bis 3, **dadurch gekennzeichnet, dass** Angelschnurführungen (5, 14) sowohl an der Endstückrute (1) als auch an der hohlen Spitzenrute (2") vorgesehen sind.

## Revendications

1. Canne à pêche, comprenant :
une section de canne pleine ayant une extrémité distale (1b) ; et
une section de tube de canne creuse ayant une extrémité de brin relié à ladite extrémité distale (1a, 1b) de ladite section de canne pleine,
ladite section de canne pleine est un talon de canne (1) et ladite section de tube de canne creux est un scion de canne (2'') de la canne à pêche, dans laquelle ladite extrémité distale (1b) du talon de canne plein (1) s'adapte dans l'extrémité de brin du scion de canne creux (2"), **caractérisée en ce que** ladite extrémité distale (1b) de ladite section de canne pleine comprend une première partie effilée et une seconde partie effilée de diamètre plus grand que celui de ladite première partie effilée, les deux des dites première et seconde parties effilées étant reçues par ladite section de tube de canne creuse.

2. Canne à pêche selon la revendication 1, **caractérisée en ce qu'**elle comprend une couche externe (4) formée d'un seul tenant autour d'une périphérie externe de ladite section de canne pleine.

3. Canne à pêche selon la revendication 2, **caractérisée en ce que** l'élasticité de la couche externe (4) est rendue plus faible que l'élasticité de ladite section de canne pleine.

4. Canne à pêche selon au moins une des revendications 1 à 3, **caractérisée en ce que** des guides de ligne de pêche (5, 14) sont disposés à la fois sur le talon de canne (1) et sur le scion de canne creux (2'').
